# FASCICULE DE BREVET EUROPEEN

(11) **EP 1 400 423 B1**
(45) Date de publication et mention de la délivrance du brevet: **30.03.2005**
(21) Numéro de dépôt: 02405811.7
(22) Date de dépôt: 18.09.2002
(51) Int. Cl.: B60T 7/20, B60T 13/08

(54) **Procédé de commande du dispositif de freinage d'une remorque et dispositif de freinage fonctionnant selon ce procédé**
Verfahren zur Steuerung einer Bremsvorrichtung eines Anhängers und Bremsvorrichtung zur Durchführung dieses Verfahrens
Method of controlling a brake device of a trailer, and brake device for operating according to said method

(43) Date de publication de la demande: 24.03.2004
(73) Titulaire: Zbinden Posieux SA, 1725 Posieux (CH)
(72) Inventeur: Tobler, Sebastian, 1727 Corpataux (CH)
(74) Mandataire: BOVARD AG - Patentanwälte

(56) Documents cités:
- DE-A- 19 519 768
- DE-C- 4 429 231
- US-A- 5 281 006

## Description

L'invention se rapporte à un procédé de commande d'un dispositif de freinage équipant un véhicule remorqué, ce véhicule étant relié par un dispositif d'attelage à un autre véhicule, dit véhicule tracteur.

L'invention se rapporte également à un dispositif de freinage pour véhicule remorqué, lequel dispositif comprend un appareil de commande qui met en oeuvre le procédé précité.

L'invention se rapporte aussi aux véhicules remorqués équipés du dispositif de freinage annoncé.

L'invention intéresse plus particulièrement, mais non exclusivement le domaine des véhicules remorqués non dédiés, c'est-à-dire des véhicules remorqués qui peuvent être attelés à un véhicule tracteur de type léger.

Un dispositif de freinage d'un véhicule comprend en général des organes de freinage chacun associé à une roue du véhicule, ainsi qu'un moyen permettant l'actionnement simultané de ces organes de freinage, lorsque le conducteur du véhicule tracteur souhaite freiner.

Par véhicule léger, on désigne des véhicules dont la masse totale en charge n'excède pas trois mille cinq cent kilogrammes.

Dans ce domaine, il est connu d'actionner les organes de freinage des roues des véhicules remorqués avec des appareils de type dits "à inertie", c'est-à-dire avec des appareils qui sont sensibles à la décélération du véhicule tracteur, conséquemment au fonctionnement du dispositif de freinage de ce véhicule tracteur.

Ces appareils d'actionnement sont placés dans le dispositif d'attelage des véhicules et conçus de manière à exploiter un déplacement relatif dudit véhicule remorqué vers ledit véhicule tracteur, pour actionner les organes de freinage du véhicule remorqué.

Ces appareils sont avantageusement très simples de construction et, par exemple, comprennent essentiellement une commande mécanique actionnant les organes de freinage des roues du véhicule remorqué via des câbles et des tringles.

On reproche cependant à ces appareils de commande de freinage de type à inertie, d'une part, de fonctionner intempestivement lorsque ces véhicules descendent une forte déclivité et, d'autre part, de ne pas freiner lors d'une marche arrière en descente.

A cette solution, on préfère celle consistant à placer les organes de freinage du véhicule remorqué sous l'influence de l'organe d'actionnement, tel une pédale de frein, qui est utilisé pour piloter le dispositif de freinage du véhicule tracteur.

Cela requiert, en général, que d'importantes adaptations soiént réalisées sur le véhicule tracteur afin de rendre possible la commande proportionnelle et simultanée des dispositifs de freinage des deux véhicules tracteur et remorqué.

Cette commande proportionnelle et simultanée des dispositifs de freinage des véhicules tracteur et remorqué ne permet cependant pas, en tant que telle, de gérer les cas de freinage excessif ou de freinage insuffisant du véhicule remorqué.

Pour remédier à cet inconvénient, il est connu d'influencer le fonctionnement du dispositif de freinage du véhicule remorqué en fonction de l'intensité de la force induite dans le dispositif d'attelage, pendant le freinage.

A cet effet, le dispositif d'attelage du véhicule tracteur est pourvu d'un capteur de force et ledit véhicule tracteur lui-même équipé d'un appareil de commande qui, lors du freinage du véhicule tracteur :
- mesure l'intensité de la force induite dans le dispositif d'attelage, au moins à un instant donné, puis,
- compare l'intensité de la force induite mesurée à l'instant donné considéré avec une valeur cible préalablement déterminée et, lorsque la différence entre l'intensité de la force induite mesurée et ladite valeur cible est supérieure à un seuil toléré prédéterminé, commande l'actionnement des organes de freinage du véhicule remorqué pour influencer le freinage dudit véhicule remorqué, et
- répète les étapes précitées de mesure, de comparaison et de commande du freinage, jusqu'à ce que la différence entre l'intensité de la force induite mesurée et la valeur cible soit inférieure au seuil toléré prédéterminé.

Un appareil de commande qui fonctionne selon ce procédé connu a ses avantages, mais, son fonctionnement est optimal uniquement dans des conditions bien précises.

En effet, la valeur ciblé étant fixée, le procédé ne permet pas de tenir compte de la déclivité de la route ou de l'utilisation d'un dispositif ralentisseur, tel un frein à courant induit. Il résulte de cela une progression du freinage non harmonieuse entre le véhicule tracteur et le véhicule remorqué.

Le fonctionnement de l'appareil précité n'est pas non plus prévu pour gérer un freinage commandé lorsque les véhicules attelés se déplacent en marche arrière dans une descente.

Un procédé de commande d'un dispositif de freinage équipant un véhicule remorqué est connu du document US 5 281 006.

Un résultat que l'invention vise à obtenir est précisément un procédé de commande qui permet de tenir compte de la masse du véhicule remorqué et se calibre automatiquement en vue d'assurer un meilleur comportement dudit véhicule remorqué et du véhicule tracteur, et ce, tant lorsque ces véhicules roulent librement que lorsqu'ils sont freinés.

Un autre résultat que l'invention vise à obtenir un procédé de commande qui permet de commander le freinage en marche avant ou en marche arrière des véhicules.

Est encore un résultat que l'invention vise à obtenir est un procédé de commande qui permet de centraliser sur le véhicule remorqué l'ensemble des moyens fonctionnels qui sont nécessaires pour commander le freinage dudit véhicule remorqué.

D'autres résultats de l'invention sont annoncés ci-après.

L'invention a pour objet un procédé de commande du type précité, ce procédé étant notamment caractérisé en ce que :
- on surveille et on détecte l'instant à partir duquel le véhicule tracteur et le véhicule remorqué sont susceptibles de rouler puis, à partir de cet instant,
   . au moins de manière intermittente, on mesure l'intensité de la force induite dans le dispositif d'attelage et,
   . pour une période de mesure de durée prédéterminée, on calcule la valeur moyenne de l'intensité de la force induite et on mémorise cette valeur moyenne,
   . au moins à l'issue de la mémorisation d'une valeur moyenne, on répète les étapes de mesure, de calcul d'une nouvelle valeur moyenne puis, de mémorisation de cette nouvelle valeur moyenne au détriment de la valeur moyenne précédemment mémorisée,
- en vue de commander l'actionnement des organes de freinage du véhicule remorqué à tout instant choisi situé après le calcul d'une valeur moyenne, on prend comme valeur cible, la valeur moyenne de l'intensité de la force induite qui a été calculée dans la période de mesure précédant l'instant choisi pour commander ledit freinage.

L'invention a également pour objet un dispositif de freinage pour véhicule remorqué, lequel dispositif comprend un appareil de commande qui met en oeuvre le procédé précité.

L'invention a aussi pour objet les véhicules remorqués équipés du dispositif de freinage annoncé.

L'invention sera bien comprise à la lecture de la description ci-après faite à titre d'exemple non limitatif en regard du dessin ci-annexé qui représente :

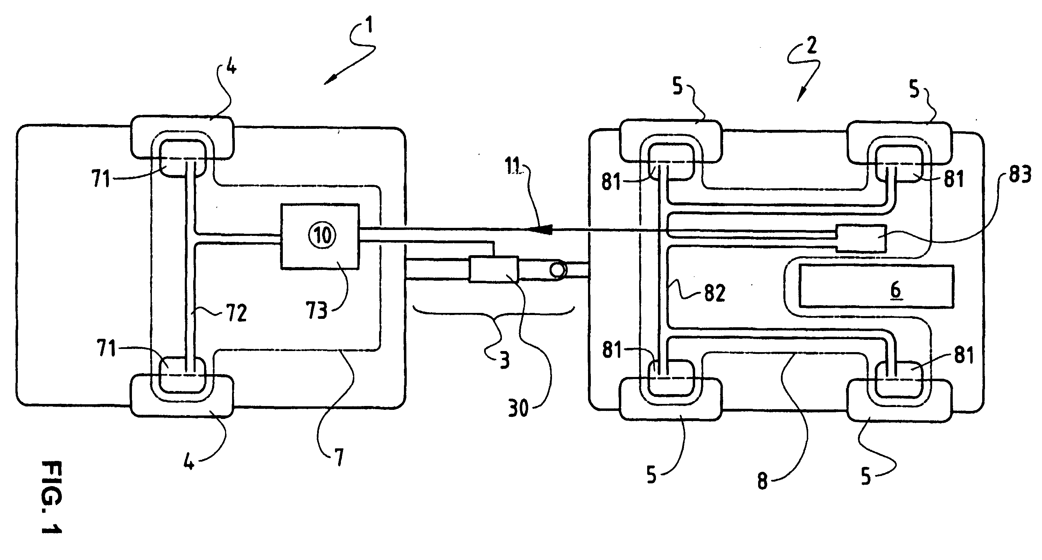

- figure 1, schématiquement et vu de dessus un ensemble constitué de deux véhicules 1, 2, reliés par un dispositif 3 d'attelage, le véhicule remorqué 1 étant pourvu d'un dispositif 7 de freinage qui met en oeuvre le procédé de commande selon l'invention,

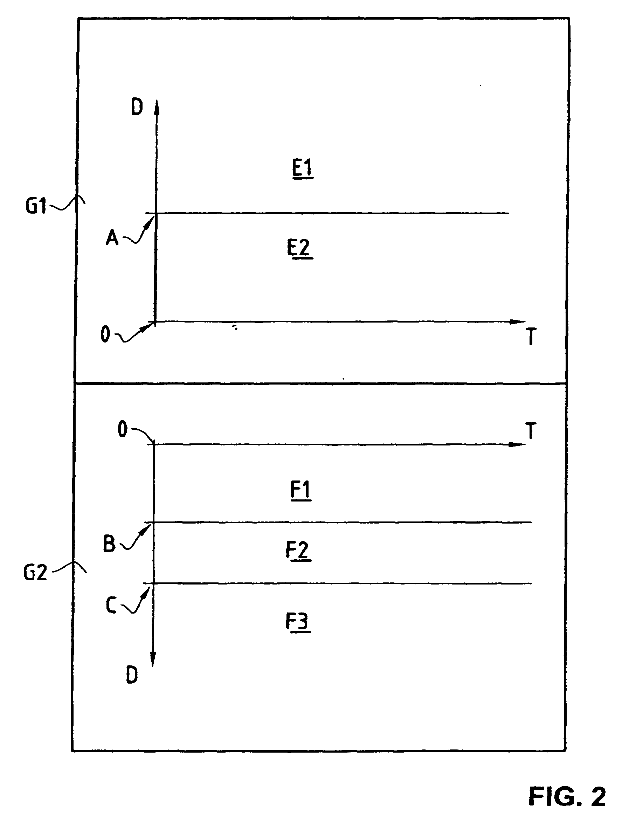

- figure 2, un tableau comprenant deux graphiques G1 et G2 illustrant, dans la représentaion dans le temps T, d'ordres E1, E2, F1, F2, F3 donnés au dispositif de freinage du véhiculé remorqué, en fonction du sens de sollicitation du dispositif d'attelage (graphique G1 pour le sens de compression ; graphique G2 pour le sens de traction) et de la différence D constatée entre l'intensité de la force induite mesurée et ladite valeur cible 10.

En se reportant au dessin, on voit un ensemble de deux véhicules 1, 2 et, précisément, un premier véhicule 1 pourvu de roues 4, dit véhicule remorqué 1, qui est relié par un dispositif 3 d'attelage à un deuxième véhicule 2, également pourvu de roues 5, quant à lui dit véhicule tracteur 2.

Plus après, on utilise également les expressions, véhicule remorqué 1 roulant ou véhicule tracteur 2 roulant.

Par véhicule remorqué 1, on désigne aussi bien un véhicule à un ou plusieurs essieux centraux qu'un véhicule à plusieurs essieux dont au moins un permet de le diriger, voire, un véhicule de type semi-remorque à un ou plusieurs essieux.

Par véhicule tracteur 2, on désigne un véhicule équipé d'un moyen 6 moteur pour l'entraînement de ses roues 5.

Par dispositif d'attelage 3, on désigne tout dispositif 3 permettant une liaison articulée entre un véhicule tracteur 2 et un véhicule remorqué 1.

Bien que cela ne soit pas représenté, les véhicules sont destinés à rouler sur toute surface prévue à cet effet.

Tel que cela est symbolisé, chacun des véhicules 1, 2 est équipé d'un dispositif 7, 8 de freinage de la rotation de ses roues 4, 5, chaque dispositif 7, 8 comprenant des organes 71, 81 de freinage desdites roues 4, 5 et un circuit 72, 82 d'actionnement de ces organes 71, 81 en vue de la commande du freinage du véhicule 1, 2 à un moment choisi.

Les dispositifs de freinage peuvent être de tout type, par exemple mécanique, hydraulique, pneumatique, électrique.

Comme cela est représenté, le dispositif 8 de freinage du véhicule tracteur 2 comprend également un organe 83 d'actionnement des organes 81 de freinage par une personne (non représentée).

Bien que cela n'apparaisse pas d'une manière flagrante sur le dessin, le dispositif 3 d'attelage, est équipé d'un capteur 30 disposé pour mesurer l'intensité d'une force induite dans ledit dispositif 3 d'attelage, notamment lors du freinage, et délivrer des informations relatives à la valeur de la force induite.

Par l'expression "force induite dans le dispositif d'attelage", on désigne une force qui est orientée sensiblement axialement audit dispositif d'attelage.

Par exemple, lorsque le dispositif 3 d'attelage comprend un timon, la force induite considérée est orientée sensiblement axialement à ce timon.

Le dispositif 7 de freinage du véhicule 1 remorqué comprend un appareil 73 de commande qui exploite des informations émises par le capteur 30 pour commander l'actionnement des organes 71 de freinage d'une manière telle que, lors dudit freinage, la force induite dans le dispositif 3 d'attelage reste inférieure à une valeur cible 10 prédéterminée.

Précisément, l'appareil 73 de commande situé dans le dispositif 7 de freinage du véhicule 1 remorqué, met en oeuvre un procédé de commande selon lequel, lors du freinage du véhicule tracteur :
- on mesure l'intensité de la force induite dans le dispositif 3 d'attelage, au moins à un instant donné, puis,
- on compare l'intensité de la force induite mesurée à l'instant donné considéré avec une valeur cible 10 préalablement déterminée et, lorsque la différence entre l'intensité de la force induite mesurée et ladite valeur cible 10 s'écarte d'un seuil toléré prédéterminé, on commande l'actionnement des organes 71 de freinage du véhicule remorqué 1 pour influencer le freinage dudit véhicule remorqué 1, et
- on répète les étapes précitées de mesure, de comparaison et de commande du freinage, jusqu'à ce que la différence entre l'intensité de la force induite mesurée et la valeur cible 10 soit inférieure au seuil toléré prédéterminé.

Selon l'invention, ce procédé est remarquable en ce que :
- on surveille et on détecte l'instant à partir duquel le véhicule tracteur 2 et le véhicule remorqué 1 sont susceptibles de rouler puis, à partir de cet instant,
   . au moins de manière intermittente, on mesure l'intensité de la force induite dans le dispositif 3 d'attelage et,
   . pour une période de mesure de durée prédéterminée, on calcule la valeur moyenne de l'intensité de la force induite et on mémorise cette valeur moyenne,
   . au moins à l'issue de la mémorisation d'une valeur moyenne, on répète les étapes de mesure, de calcul d'une nouvelle valeur moyenne puis, de mémorisation de cette nouvelle valeur moyenne au détriment de la valeur moyenne précédemment mémorisée,
- en vue de commander l'actionnement des organes 71 de freinage du véhicule remorqué 1 à tout instant choisi situé après le calcul d'une valeur moyenne, on prend comme valeur cible 10, la valeur moyenne de l'intensité de la force induite qui a été calculée dans la période de mesure précédant l'instant choisi pour commander ledit freinage.

De manière encore remarquable, pour commander l'actionnement des organes 71 de freinage du véhicule remorqué 1 à tout instant choisi situé après le calcul d'une valeur moyenne :
- on surveille la production, sur le véhicule tracteur 2 d'un signal 11 qui, dit de fonctionnement, révèle l'actionnement de son dispositif 8 de freinage et donc l'instant choisi pour commander le freinage des véhicules, et
- lorsque l'intensité de la force induite dans le dispositif 3 d'attelage par le véhicule remorqué 1 s'écarte du seuil toléré par rapport à la valeur cible 10, en vue de corriger l'intensité de ladite force induite, on commande l'actionnement des organes 71 de freinage du véhicule remorqué 1 uniquement si on a préalablement détecté le signal 11 de fonctionnement du dispositif 8 de freinage du véhicule tracteur 1.

De manière notable, on surveille la production, sur le véhicule tracteur 2 d'un signal 11 qui, dit de fonctionnement, est un signal électrique 11 produit pour commander le fonctionnement de signaux lumineux destinés à signaler l'usage des freins dudit véhicule tracteur 2, et donc révèle l'actionnement du dispositif 8 de freinage de ce véhicule.

D'une part, lorsque la commande du freinage est détectée, on interrompt le processus de calcul de valeur moyenne de la force induite dans le dispositif 3 d'attelage et on surveille l'évolution de la force induite dans le dispositif 3 d'attelage et, d'autre part, lorsque le freinage a été réalisé, on reprend le processus de calcul de la valeur moyenne de la force induite dans le dispositif 3 d'attelage.

Ces premières particularités techniques du procédé permettent de garantir le freinage optimal du véhicule remorqué, quelle que soit sa charge.

De manière remarquable, on mesure l'intensité de la force induite dans le dispositif 3 d'attelage avec une fréquence de mesure prédéterminée, de manière à réaliser une surveillance sensiblement continue de l'intensité de la force induite dans ledit dispositif 3 d'attelage.

La fréquence de mesure ainsi d'ailleurs que le nombre de mesures nécessaires pour pouvoir établir une valeur moyenne peuvent être déterminés par essais, en fonction des matériels utilisés.

D'une manière également remarquable :
- on mesure l'intensité de la force induite dans le dispositif 3 d'attelage par le véhicule remorqué 1 dans les deux sens possibles de sollicitation de ce dispositif 3 d'attelage, à savoir en traction et en compression, et
- on associe à l'intensité mesurée une information relative au sens de la force considérée, et
- tant pour calculer une valeur moyenne que pour surveiller l'évolution de la force lors d'un freinage, en plus de la valeur mesurée de la force induite, on exploite l'information relative au sens de la force induite de manière à commander le freinage quel que soit le sens de déplacement des véhicules 1, 2 liés par le dispositif 3 d'attelage et quel que soit l'inclinaison de la surface sur laquelle lesdits véhicules se déplacent.

De manière remarquable :
- lorsque la force induite dans le dispositif 3 d'attelage est détectée dans le sens de compression dudit dispositif 3 d'attelage,
   . si, en valeur absolue, la différence D entre l'intensité de la force induite mesurée et ladite valeur cible 10 est supérieure à une première valeur A prédéterminée de seuil, alors, on accentue E1 le freinage, tandis que,
   . si, en valeur absolue, la différence D entre l'intensité de la force induite mesurée et ladite valeur cible 10 est inférieure à ladite première valeur A prédéterminée de seuil, alors, on maintient E2 le freinage en l'état,
- lorsque la force induite dans le dispositif 3 d'attelage est détectée dans le sens de traction dudit dispositif 3 d'attelage,
   . si, en valeur absolue, la différence D entre l'intensité de la force induite mesurée et ladite valeur cible 10 est inférieure à une deuxième valeur B prédéterminée de seuil, alors, on réduit F1 le freinage,
   . si, en valeur absolue, la différence D entre l'intensité de la force induite mesurée et ladite valeur cible 10 est supérieure à ladite deuxième valeur B prédéterminée de seuil, mais inférieure à une troisième valeur C prédéterminée de seuil, alors, on maintient F2 le freinage en l'état,
   . si, en valeur absolue, la différence D entre l'intensité de la force induite mesurée et ladite valeur cible 10 est supérieure à ladite troisième valeur C prédéterminée de seuil, alors, on accentue F3 le freinage.

Tel que cela a été annoncé, la figure 2 du dessin, consiste en un tableau comprenant deux graphiques G1 et G2 illustrant, dans la représentation dans le temps T, d'ordres (E1, E2, F1, F2, F3) donnés au dispositif de freinage du véhicule remorqué, en fonction du sens de sollicitation du dispositif d'attelage (graphique G1 pour le sens de compression ; graphique G2 pour le sens de traction) et de la différence D constatée entre l'intensité de la force induite mesurée et ladite valeur cible 10.

Sur les graphiques G1 et G2, la différence D entre l'intensité de la force induite mesurée et la valeur cible 10 peut, en valeur absolue, évoluer entre la valeur zéro (0) et une valeur supérieure à zéro.

Sur le graphique G1, une ligne parallèle à l'axe de temps T, représente une première valeur de seuil, repérée A.

Sur le graphique G2, deux lignes parallèles à l'axe de temps T, représentent, l'une, repérée B, une seconde valeur de seuil, l'autre, repérée C, une troisième valeur de seuil.

Les expressions "on accentue le freinage", "on maintient le freinage en l'état", "on réduit le freinage", signifient par exemple respectivement, qu'on accentue la pression d'un fluide hydraulique pour la commande des organes de freinage, qu'on maintient cette pression, qu'on réduit cette pression.

Le procédé de l'invention permet une adaptation dynamique de la valeur cible, c'est-à-dire de la valeur de référence, du fait que cette valeur est calculée continuellement.

Le procédé selon l'invention permet de prendre en compte la situation des véhicules (avancement ou recul sur une surface horizontale ou inclinée) ce qui permet un freinage adapté à la dite situation.

Avec les procédés qui utilisent une valeur cible fixe, la différence entre la valeur cible et la valeur de l'intensité mesurée au moment d'un freinage ne reflète pas la réalité de la situation et le freinage du véhicule remorqué n'est pas optimal.

Ces autres particularités techniques du procédé permettent de garantir :
- le freinage du véhicule remorqué 1 lorsque les véhicules tracteur 2 et remorqué 1 doivent être immobilisés en montée ou doivent pouvoir reculer, de manière contrôlée, dans une déclivité qu'ils gravissaient précédemment,
- l'absence de freinage, lorsque les véhicules tracteur 2 et remorqué 1 font marche arrière dans une déclivité qu'ils descendaient précédemment, en évitant ainsi les systèmes classiques de desserrage des freins lors d'une telle manoeuvre.

Conformément à l'invention, pour détecter l'instant à partir duquel le véhicule tracteur 2 et le véhicule remorqué 1 sont susceptibles de rouler, on surveille une mise en tension électrique d'un organe du moyen 6 de moteur du véhicule tracteur 2.

Par exemple, on surveille la mise sous tension électrique qui résulte de la manoeuvre, sur le véhicule tracteur 2, d'une clef d'actionnement d'un contacteur électrique de démarrage (non représenté).

Un tel signal de mise sous tension est classiquement disponible sur une prise de raccordement électrique (non représentée) située à l'arrière d'un véhicule tracteur équipé d'un organe d'attelage.

Une telle prise de raccordement permet de transmettre vers le véhicule remorqué différents signaux électriques, tels des signaux de commande d'indicateurs lumineux de changement de direction, des signaux de commande d'indicateurs lumineux de position, des signaux de commande d'indicateurs lumineux de freinage, un courant électrique d'alimentation d'un appareil situé sur le véhicule remorqué.

Une telle prise est largement connue et par exemple, il s'agit d'une prise à treize pôles de type normalisée sous la référence ISO 11446.

Le véhicule tracteur 2 comprend une telle prise de type femelle et le véhicule remorqué 1 comprend donc une prise de type mâle.

D'une manière avantageuse, mais non obligatoire, pour la commande du dispositif 7 de freinage du véhicule remorqué 1, on prélève au niveau de chaque roue 4 du véhicule remorqué 1, une indication relative à la rotation de cette roue 4 et, on prend en compte les indications sur la rotation de chacune desdites roues 4 du véhicule 1, de manière à éviter leur blocage en phase de freinage.

De manière remarquable, on surveille une mise hors tension électrique d'un organe du moyen 6 de moteur du véhicule tracteur 2 et lorsqu'on détecte une telle mise hors tension, on commande le dispositif 7 de freinage du véhicule remorqué 1 de manière à immobiliser ledit véhicule remorqué 1.

Ces particularités permettent de garantir l'immobilisation du véhicule remorqué en cas de défaillance du dispositif 3 d'attelage, par exemple en cas de rupture.

Le dispositif 7 de freinage pour la mise en oeuvre du procédé de l'invention est remarquable en ce que le circuit 72 de commande de ses organes 71 de freinage comprend au moins un appareil 73 de commande qui assure les fonctions suivantes :
- surveille et détecte l'instant à partir duquel le véhicule tracteur et le véhicule remorqué 1 sont susceptibles de rouler puis, à partir de cet instant,
   . au moins de manière intermittente, mesure l'intensité de la force induite dans le dispositif 3 d'attelage et,
   . pour une période de mesure de durée prédéterminée, calcule la valeur moyenne de l'intensité de la force induite et mémorise cette valeur moyenne,
   . au moins à l'issue de la mémorisation d'une valeur moyenne, répète les étapes de mesure, de calcul d'une nouvelle valeur moyenne puis, de mémorisation de cette nouvelle valeur moyenne au détriment de la valeur moyenne précédemment mémorisée,
- en vue de commander l'actionnement des organes 71 de freinage du véhicule remorqué 1 à tout instant choisi situé après le calcul d'une valeur moyenne, prend comme valeur cible 10, la valeur moyenne de l'intensité de la force induite qui a été calculée dans la période de mesure précédant l'instant choisi pour commander ledit freinage.

De manière encore remarquable, pour commander l'actionnement des organes 71 de freinage du véhicule remorqué 1 à tout instant choisi situé après le calcul d'une valeur moyenne, l'appareil 73 de commande est équipé pour assurer les fonctions suivantes :
- surveiller et détecter la production d'un signal 11 de fonctionnement d'un organe 83 de commande d'un dispositif 8 de freinage d'un véhicule tracteur 2, ce signal révélant l'instant choisi pour commander le freinage,
- déterminer, lorsqu'il y a détection d'un tel signal de fonctionnement, si l'intensité de la force induite dans le dispositif 3 d'attelage par le véhicule remorqué 1 s'écarte d'un seuil toléré prédéterminé par rapport à une valeur cible 10 précédemment mémorisée,
- commander l'actionnement des organes 71 de freinage du véhicule remorqué 1 dans le cas où l'intensité de la force induite dans le dispositif 3 d'attelage par le véhicule remorqué 1 s'écarte d'un seuil toléré prédéterminé par rapport à la valeur cible 10.

De manière encore remarquable, l'appareil 73 de commande est équipé pour surveiller la production sur le véhicule tracteur 2 d'un signal 11 qui, dit de fonctionnement, est un signal électrique 11 produit pour commander le fonctionnement de signaux lumineux destinés à signaler l'usage des freins dudit véhicule tracteur 2, et donc révèle l'actionnement du dispositif 8 de freinage de ce véhicule.

De manière encore remarquable, l'appareil 73 de commande est équipé pour, d'une part, lorsque la commande du freinage est détectée, interrompre le processus de calcul de valeur moyenne de la force induite dans le dispositif 3 d'attelage et surveiller l'évolution de la force induite dans ledit dispositif 3 d'attelage et, d'autre part, lorsque le freinage a été réalisé, reprendre le processus de calcul de la valeur moyenne de la force induite dans ledit dispositif 3 d'attelage.

De manière encore remarquable, l'appareil 73 de commande est équipé pour mesurer l'intensité de la force induite dans le dispositif 3 d'attelage avec une fréquence de mesure déterminée de manière à réaliser une surveillance sensiblement continue de l'intensité de la force induite dans ledit dispositif 3 d'attelage.

De manière encore remarquable, l'appareil 73 de commande est équipé pour :
- mesurer l'intensité de la force induite dans le dispositif 3 d'attelage par le véhicule remorqué 1 dans les deux sens possibles de sollicitation de ce dispositif 3 d'attelage, à savoir en traction et en compression, et
- on associe à l'intensité mesurée une information relative au sens de la force considérée, et
- tant pour calculer une valeur moyenne que pour surveiller l'évolution de la force lors d'un freinage, en plus de la valeur mesurée de la force induite, on exploite l'information relative au sens de la force induite de manière à commander le freinage quel que soit le sens de déplacement des véhicules 1, 2 liés par le dispositif 3 d'attelage et quel que soit l'inclinaison de la surface sur laquelle lesdits véhicules se déplacent.

De manière également remarquable, l'appareil 73 de commande est équipé pour assurer les fonctions suivantes :
- lorsque la force induite dans le dispositif 3 d'attelage est détectée dans le sens de compression dudit dispositif 3 d'attelage,
   . si, en valeur absolue, la différence D entre l'intensité de la force induite mesurée et ladite valeur cible 10 est supérieure à une première valeur A prédéterminée de seuil, accentuer le freinage, tandis que,
   . si, en valeur absolue, la différence D entre l'intensité de la force induite mesurée et ladite valeur cible 10 est inférieure à ladite première valeur A prédéterminée de seuil, maintenir le freinage en l'état,
- lorsque la force induite dans le dispositif 3 d'attelage est détectée dans le sens de traction dudit dispositif 3 d'attelage,
   . si, en valeur absolue, la différence D entre l'intensité de la force induite mesurée et ladite valeur cible 10 est inférieure à une deuxième valeur B prédéterminée de seuil, réduire le freinage,
   . si, en valeur absolue, la différence D entre l'intensité de la force induite mesurée et ladite valeur cible 10 est supérieure à ladite deuxième valeur B prédéterminée de seuil, mais inférieure à une troisième valeur C prédéterminée de seuil, maintenir le freinage en l'état,
   . si, en valeur absolue, la différence D entre l'intensité de la force induite mesurée et ladite valeur cible 10 est supérieure à ladite troisième valeur C prédéterminée de seuil, accentuer le freinage.

De manière également remarquable, l'appareil 73 de commande est équipé pour assurer les fonctions suivantes :
- surveiller et détecter l'instant à partir duquel le véhicule tracteur 2 et le véhicule remorqué 1 sont susceptibles de rouler.

De manière également remarquable et préférentielle, l'appareil 73 de commande est équipé pour assurer les fonctions suivantes :
- surveiller et détecter une mise en tension électrique d'un organe du moyen 6 moteur du véhicule tracteur 2, c'est-à-dire d'un événement révélateur de l'instant à partir duquel le véhicule tracteur 2 et le véhicule remorqué 1 sont susceptibles de rouler.

Enfin, avantageusement, mais non limitativement, l'appareil 73 de commande est équipé pour assurer les fonctions suivantes :
- prélever au niveau de chaque roue 4 du véhicule remorqué 1, une indication relative à la rotation de cette roue 4 et,
- prendre en compte les indications sur la rotation de chacune desdites roues 4 du véhicule 1, de manière à éviter leur blocage en phase de freinage.

De manière notable, l'appareil 73 de commande est équipé pour surveiller une mise hors tension électrique d'un organe du moyen 6 de moteur du véhicule tracteur 2 et lorsqu'une telle mise hors tension est détectée, commander le dispositif 3 de freinage du véhicule remorqué 1 de manière à immobiliser ledit véhicule remorqué 1.

Ces particularités permettent de garantir l'immobilisation du véhicule remorqué en cas de défaillance du dispositif d'attelage, par exemple en cas de rupture.

De manière également notable, le capteur 30 de force est disposé dans une partie du dispositif 3 d'attelage qui est associée au véhicule remorqué 1.

Cette solution permet de garantir la compatibilité du véhicule remorqué 1 avec tout véhicule tracteur 1.

De manière notable, l'appareil 73 de commande est équipé pour assurer les fonctions suivantes :
- surveiller une mise hors tension électrique d'un organe du moyen 6 moteur du véhicule tracteur 2 et,
- détecter une telle mise hors tension, et,
- dans le cas d'une telle mise hors tension, commander le dispositif de freinage du véhicule remorqué 1 de manière à immobiliser ledit véhicule remorqué 1.

Un des intérêts du dispositif de l'invention réside dans le fait qu'il ne requiert aucune installation spéciale sur le véhicule tracteur.

Le procédé mis en oeuvre dans ce dispositif assure son calibrage automatique en fonction de la charge du véhicule remorqué et ce par le biais de la régulation du freinage.

Avec le procédé mis en oeuvre dans le dispositif de l'invention, le véhicule remorqué n'est plus freiné intempestivement et le freinage est également assuré et régulé lorsque le véhicule remorqué recule.

Enfin, le procédé de l'invention est compatible avec l'utilisation d'un dispositif entravant le blocage des roues lors du freinage.

Le dispositif de commande selon l'invention est particulièrement avantageux car on peut le placer entièrement sur le véhicule remorqué 1 et obtenir ainsi un véhicule remorqué compatible avec tout véhicule tracteur, à la condition près que ce véhicule délivre un signal de fonctionnement de son dispositif de freinage, ce qui est le cas, par exemple, avec un dispositif de raccordement électrique entre véhicules qui met en oeuvre des prises à treize pôles normalisées ISO 11446.

## Revendications

1. Procédé de commande d'un dispositif (7) de freinage équipant un premier véhicule roulant (1), dit véhicule remorqué (1), relié par un dispositif (3) d'attelage à un deuxième véhicule (2), dit véhicule tracteur (2), le véhicule tracteur (2) étant lui même équipé d'un dispositif (8) de freinage doté d'un organe d'actionnement (83),
selon lequel procédé, lors du freinage du véhicule tracteur :
- on mesure l'intensité de la force induite dans le dispositif (3) d'attelage, au moins à un instant donné, puis,
- on compare l'intensité de la force induite mesurée à l'instant donné considéré avec une valeur cible (10) préalablement déterminée et, lorsque la différence entre l'intensité de la force induite mesurée et ladite valeur cible (10) s'écarte d'un seuil toléré prédéterminé, on commande l'actionnement des organes (71) de freinage du véhicule remorqué (1) pour influencer le freinage dudit véhicule remorqué (1), et
- on répète les étapes précitées de mesure, de comparaison et de commande du freinage, jusqu'à ce que la différence entre l'intensité de la force induite mesurée et la valeur cible (10) soit inférieure au seuil toléré prédéterminé,
ce procédé étant **caractérisé en ce que** :
- on surveille et on détecte l'instant à partir duquel le véhicule tracteur (2) et le véhicule remorqué (1) sont susceptibles de rouler puis, à partir de cet instant,
. au moins de manière intermittente, on mesure l'intensité de la force induite dans le dispositif (3) d'attelage et,
. pour une période de mesure de durée prédéterminée, on calcule la valeur moyenne de l'intensité de la force induite et on mémorise cette valeur moyenne,
. au moins à l'issue de la mémorisation d'une valeur moyenne, on répète les étapes de mesure, de calcul d'une nouvelle valeur moyenne puis, de mémorisation de cette nouvelle valeur moyenne au détriment de la valeur moyenne précédemment mémorisée,
- en vue de commander l'actionnement des organes (71) de freinage du véhicule remorqué (1) à tout instant choisi situé après le calcul d'une valeur moyenne, on prend comme valeur cible (10), la valeur moyenne de l'intensité de la force induite qui a été calculée dans la période de mesure précédant l'instant choisi pour commander ledit freinage.

2. Procédé selon la revendication 1, **caractérisé en ce que** pour commander l'actionnement des organes (71) de freinage du véhicule remorqué (1) à tout instant choisi situé après le calcul d'une valeur moyenne :
- on surveille la production, sur le véhicule tracteur (2) d'un signal (11) qui, dit de fonctionnement, révèle l'actionnement de son dispositif (8) de freinage et donc l'instant choisi pour commander le freinage des véhicules, et
- lorsque l'intensité de la force induite dans le dispositif (3) d'attelage par le véhicule remorqué (1) s'écarte du seuil toléré par rapport à la valeur cible (10), en vue de corriger l'intensité de ladite force induite, on commande l'actionnement des organes (71) de freinage du véhicule remorqué (1) uniquement si on a préalablement détecté le signal (11) de fonctionnement du dispositif (8) de freinage du véhicule tracteur (1).

3. Procédé selon la revendication 1 ou 2, **caractérisé en ce qu'**on surveille la production, sur le véhicule tracteur (2) d'un signal (11) qui, dit de fonctionnement, est un signal électrique (11) produit pour commander le fonctionnement de signaux lumineux destinés à signaler l'usage des freins dudit véhicule tracteur (2), et donc révèle l'actionnement du dispositif (8) de freinage de ce véhicule.

4. Procédé selon l'une quelconque des revendications 1 à 3, **caractérisé en ce que**, d'une part, lorsque la commande du freinage est détectée, on interrompt le processus de calcul de valeur moyenne de la force induite dans le dispositif (3) d'attelage et on surveille l'évolution de la force induite dans le dispositif (3) d'attelage et, d'autre part, lorsque le freinage a été réalisé, on reprend le processus de calcul de la valeur moyenne de la force induite dans le dispositif (3) d'attelage.

5. Procédé selon l'une quelconque des revendications 1 à 4, **caractérisé en ce qu'**on mesure l'intensité de la force induite dans le dispositif (3) d'attelage avec une fréquence de mesure prédéterminée, de manière à réaliser une surveillance sensiblement continue de l'intensité de la force induite dans ledit dispositif (3) d'attelage.

6. Procédé selon l'une quelconque des revendications 1 à 5, **caractérisé en ce que** :
- on mesure l'intensité de la force induite dans le dispositif (3) d'attelage par le véhicule remorqué (1) dans les deux sens possibles de sollicitation de ce dispositif (3) d'attelage, à savoir en traction et en compression, et
- on associe à l'intensité mesurée une information relative au sens de la force considérée, et
- tant pour calculer une valeur moyenne que pour surveiller l'évolution de la force lors d'un freinage, en plus de la valeur mesurée de la force induite, on exploite l'information relative au sens de la force induite de manière à commander le freinage quel que soit le sens de déplacement des véhicules (1, 2) liés par le dispositif (3) d'attelage et quel que soit l'inclinaison de la surface sur laquelle lesdits véhicules se déplacent.

7. Procédé selon la revendication 6, **caractérisé en ce que** :
- lorsque la force induite dans le dispositif (3) d'attelage est détectée dans le sens de compression dudit dispositif (3) d'attelage,
. si, en valeur absolue, la différence (D) entre l'intensité de la force induite mesurée et ladite valeur cible (10) est supérieure à une première valeur (A) prédéterminée de seuil, alors, on accentue (E1) le freinage, tandis que,
. si, en valeur absolue, la différence (D) entre l'intensité de la force induite mesurée et ladite valeur cible (10) est inférieure à ladite première valeur (A) prédéterminée de seuil, alors, on maintient (E2) le freinage en l'état,
- lorsque la force induite dans le dispositif (3) d'attelage est détectée dans le sens de traction dudit dispositif (3) d'attelage,
. si, en valeur absolue, la différence (D) entre l'intensité de la force induite mesurée et ladite valeur cible (10) est inférieure à une deuxième valeur (B) prédéterminée de seuil, alors, on réduit (F1) le freinage,
. si, en valeur absolue, la différence (D) entre l'intensité de la force induite mesurée et ladite valeur cible (10) est supérieure à ladite deuxième valeur (B) prédéterminée de seuil, mais inférieure à une troisième valeur (C) prédéterminée de seuil, alors, on maintient (F2) le freinage en l'état,
. si, en valeur absolue, la différence (D) entre l'intensité de la force induite mesurée et ladite valeur cible (10) est supérieure à ladite troisième valeur (C) prédéterminée de seuil, alors, on accentue (F3) le freinage.

8. Procédé selon l'une quelconque des revendications 1 à 7, **caractérisé en ce que** pour détecter l'instant à partir duquel le véhicule tracteur (2) et le véhicule remorqué (1) sont susceptibles de rouler, on surveille une mise en tension électrique d'un organe du moyen (6) moteur du véhicule tracteur (2).

9. Procédé selon l'une quelconque des revendications 1 à 8, **caractérisé en ce que** pour la commande du dispositif (7) de freinage du véhicule remorqué (1), on prélève au niveau de chaque roue (4) du véhicule remorqué (1), une indication relative à la rotation de cette roue (4) et, on prend en compte les indications sur la rotation de chacune desdites roues (4) du véhicule (1), de manière à éviter leur blocage en phase de freinage.

10. Procédé selon l'une quelconque des revendications 1 à 9, **caractérisé en ce qu'**on surveille une mise hors tension électrique d'un organe du moyen (6) de moteur du véhicule tracteur (2) et lorsqu'on détecte une telle mise hors tension, on commande le dispositif (3) de freinage du véhicule remorqué (1) de manière à immobiliser ledit véhicule remorqué (1).

11. Dispositif de freinage d'un véhicule remorqué (1) destiné à être relié à un véhicule tracteur (2) par un dispositif d'attelage (3), le véhicule tracteur étant lui même équipé d'un dispositif (8) de freinage doté d'un organe d'actionnement (83), ledit dispositif (7) de freinage de véhicule remorqué (1) comprenant au moins un appareil (73) de commande, l'appareil (73) de commande mettant en oeuvre un procédé de commande selon lequel, lors du freinage du véhicule tracteur :
- on mesure l'intensité de la force induite dans le dispositif (3) d'attelage, au moins à un instant donné, puis,
- on compare l'intensité de la force induite mesurée à l'instant donné considéré avec une valeur cible (10) préalablement déterminée et, lorsque la différence entre l'intensité de la force induite mesurée et ladite valeur cible (10) s'écarte d'un seuil toléré prédéterminé, on commande l'actionnement des organes (71) de freinage du véhicule remorqué (1) pour influencer le freinage dudit véhicule remorqué (1), et
- on répète les étapes précitées de mesure, de comparaison et de commande du freinage, jusqu'à ce que la différence entre l'intensité de la force induite mesurée et la valeur cible (10) soit inférieure au seuil toléré prédéterminé, ce dispositif de freinage étant **caractérisé en ce que** l'appareil (73) de commande assure les fonctions suivantes :
- surveille et détecte l'instant à partir duquel le véhicule tracteur et le véhicule remorqué (1) sont susceptibles de rouler puis, à partir de cet instant,
. au moins de manière intermittente, mesure l'intensité de la force induite dans le dispositif (3) d'attelage et,
. pour une période de mesure de durée prédéterminée, calcule la valeur moyenne de l'intensité de la force induite et mémorise cette valeur moyenne,
. au moins à l'issue de la mémorisation d'une valeur moyenne, répète les étapes de mesure, de calcul d'une nouvelle valeur moyenne puis, de mémorisation de cette nouvelle valeur moyenne au détriment de la valeur moyenne précédemment mémorisée,
- en vue de commander l'actionnement des organes (71) de freinage du véhicule remorqué (1) à tout instant choisi situé après le calcul d'une valeur moyenne, prend comme valeur cible (10), la valeur moyenne de l'intensité de la force induite qui a été calculée dans la période de mesure précédant l'instant choisi pour commander ledit freinage.

12. Dispositif selon la revendication 11, **caractérisé en ce que** l'appareil de commande est équipé pour :
- surveiller et détecter la production d'un signal (11) de fonctionnement d'un organe (83) de commande d'un dispositif (8) de freinage d'un véhicule tracteur (2), ce signal révélant l'instant choisi pour commander le freinage,
- déterminer, lorsqu'il y a détection d'un tel signal de fonctionnement, si l'intensité de la force induite dans le dispositif (3) d'attelage par le véhicule remorqué (1) s'écarte d'un seuil toléré prédéterminé par rapport à une valeur cible (10) précédemment mémorisée,
- commander l'actionnement des organes (71) de freinage du véhicule remorqué (1) dans le cas où l'intensité de la force induite dans le dispositif (3) d'attelage par le véhicule remorqué (1) s'écarte d'un seuil toléré prédéterminé par rapport à la valeur cible (10).

13. Dispositif selon la revendication 11 ou 12, **caractérisé en ce que** l'appareil (73) de commande est équipé pour surveiller la production sur le véhicule tracteur (2) d'un signal (11) qui, dit de fonctionnement, est un signal électrique (11) produit pour commander le fonctionnement de signaux lumineux destinés à signaler l'usage des freins dudit véhicule tracteur (2), et donc révèle l'actionnement du dispositif (8) de freinage de ce véhicule.

14. Dispositif selon l'une quelconque des revendications 11 à 13, **caractérisé en ce que** l'appareil (73) de commande est équipé pour, d'une part, lorsque la commande du freinage est détectée, interrompre le processus de calcul de valeur moyenne de la force induite dans le dispositif (3) d'attelage et surveiller l'évolution de la force induite dans ledit dispositif (3) d'attelage et, d'autre part, lorsque le freinage a été réalisé, reprendre le processus de calcul de la valeur moyenne de la force induite dans ledit dispositif (3) d'attelage.

15. Dispositif selon l'une quelconque des revendications 11 à 14, **caractérisé en ce que** l'appareil (73) de commande est équipé pour mesurer l'intensité de la force induite dans le dispositif (3) d'attelage avec une fréquence de mesure déterminée de manière à réaliser une surveillance sensiblement continue de l'intensité de la force induite dans ledit dispositif (3) d'attelage.

16. Dispositif selon l'une quelconque des revendications 11 à 15, **caractérisé en ce que** l'appareil (73) de commande est équipé pour :
- mesurer l'intensité de la force induite dans le dispositif (3) d'attelage par le véhicule remorqué (1) dans les deux sens possibles de sollicitation de ce dispositif (3) d'attelage, à savoir en traction et en compression, et
- on associe à l'intensité mesurée une information relative au sens de la force considérée, et
- tant pour calculer une valeur moyenne que pour surveiller l'évolution de la force lors d'un freinage, en plus de la valeur mesurée de la force induite, on exploite l'information relative au sens de la force induite de manière à commander le freinage quel que soit le sens de déplacement des véhicules (1, 2) liés par le dispositif (3) d'attelage et quel que soit l'inclinaison de la surface sur laquelle lesdits véhicules se déplacent.

17. Dispositif selon la revendication 16, **caractérisé en ce que** l'appareil (73) de commande est équipé pour :
- lorsque la force induite dans le dispositif (3) d'attelage est détectée dans le sens de compression dudit dispositif (3) d'attelage,
. si, en valeur absolue, la différence (D) entre l'intensité de la force induite mesurée et ladite valeur cible (10) est supérieure à une première valeur (A) prédéterminée de seuil, accentuer le freinage, tandis que,
. si, en valeur absolue, la différence (D) entre l'intensité de la force induite mesurée et ladite valeur cible (10) est inférieure à ladite première valeur (A) prédéterminée de seuil, maintenir le freinage en l'état,
- lorsque la force induite dans le dispositif (3) d'attelage est détectée dans le sens de traction dudit dispositif (3) d'attelage,
. si, en valeur absolue, la différence (D) entre l'intensité de la force induite mesurée et ladite valeur cible (10) est inférieure à une deuxième valeur (B) prédéterminée de seuil, réduire le freinage,
. si, en valeur absolue, la différence (D) entre l'intensité de la force induite mesurée et ladite valeur cible (10) est supérieure à ladite deuxième valeur (B) prédéterminée de seuil, mais inférieure à une troisième valeur (C) prédéterminée de seuil, maintenir le freinage en l'état,
. si, en valeur absolue, la différence (D) entre l'intensité de la force induite mesurée et ladite valeur cible (10) est supérieure à ladite troisième valeur (C) prédéterminée de seuil, accentuer le freinage.

18. Dispositif selon l'une quelconque des revendications 11 à 17, **caractérisé en ce que** l'appareil (73) de commande est équipé pour surveiller et détecter l'instant à partir duquel le véhicule tracteur (2) et le véhicule remorqué (1) sont susceptibles de rouler.

19. Dispositif selon l'une quelconque des revendications 11 à 18, **caractérisé en ce que** l'appareil (73) de commande est équipé pour surveiller et détecter une mise en tension électrique d'un organe du moyen (6) de moteur du véhicule tracteur (2), c'est-à-dire d'un événement révélateur de l'instant à partir duquel le véhicule tracteur (2) et le véhicule remorqué (1) sont susceptibles de rouler.

20. Dispositif selon l'une quelconque des revendications 11 à 19, **caractérisé en ce que** l'appareil (73) de commande est équipé pour :
- prélever au niveau de chaque roue (4) du véhicule remorqué (1), une indication relative à la rotation de cette roue (4) et,
- prendre en compte les indications sur la rotation de chacune desdites roues (4) du véhicule (1), de manière à éviter leur blocage en phase de freinage.

21. Dispositif selon l'une quelconque des revendications 11 à 20, **caractérisé en ce que** l'appareil (73) de commande est équipé pour surveiller une mise hors tension électrique d'un organe du moyen (6) de moteur du véhicule tracteur (2) et lorsqu'une telle mise hors tension est détectée, commander le dispositif (3) de freinage du véhicule remorqué (1) de manière à immobiliser ledit véhicule remorqué (1).

22. Dispositif selon l'une des revendications 11 à 21 **caractérisé en ce que** un capteur (30) de force est disposé dans une partie du dispositif (3) d'attelage qui est associée au véhicule remorqué (1).

## Patentansprüche

1. Verfahren zur Steuerung einer Bremsvorrichtung (7) an einem ersten Fahrzeuges (1), des so genannten Anhängers (1), der durch eine Kupplungsvorrichtung (3) an einem zweiten Fahrzeug (2), dem sogenannten Traktor (2), angekoppelt ist, wobei der Traktor (2) selber mit einer mit einem Antriebsorgan (83) versehenen Bremsvorrichtung (8) ausgestattet ist,
in welchem Verfahren beim Bremsvorgang des Traktors :
- die Intensität der in der Kupplungsvorrichtung (3) wenigstens an einem bestimmten Zeitpunkt induzierten Kraft gemessen wird,
- die Intensität der an dem gegebenen Zeitpunkt gemessenen induzierten Kraft mit einem vorab ermittelten Zielwert (10) verglichen wird und, wenn der Unterschied zwischen der Intensität der gemessenen induzierten Kraft und dem genannten Zielwert von einem tolerierten vorgeschriebenen Schwellenwert abweicht, die Betätigung der Bremsvorrichtungen (71) eines Anhängers (1) gesteuert wird, um auf das Bremsen des genannten Anhängers (1) zu wirken, und
- die vorgenannten Schritte, also das Messen, der Vergleich und die Bremssteuerung, wiederholt werden, bis der Unterschied zwischen der Intensität der gemessenen induzierten Kraft und dem genannten Zielwert (10) unter dem tolerierbaren vorgeschriebenen Schwellenwert liegt,
wobei das Verfahren **dadurch gekennzeichnet ist,**
- **dass** der Augenblick überwacht und detektiert wird, ab welchem der Traktor (2) und der Anhänger (1) vermutlich fahren werden und, dass ab diesem Moment
- die Intensität der in der Kupplungsvorrichtung (3) induzierten Kraft wenigstens zeitweise gemessen wird,
- **dass** für eine vorgegebene Messzeitspanne der Durchschnittswert der Intensität der induzierten Kraft berechnet und dieser Mittelwert gespeichert wird.
- **dass** mindestens nach der Speicherung eines Mittelwertes, die Schritte zur Messung und zur Berechnung eines neuen Mittelwertes und zur Speicherung dieses neuen Mittelwertes mit Überschreiben des vorhin gespeicherten Mittelwert wiederholt vorgenommen werden,
- **dass** zur Steuerung der Betätigung der Bremsorgane (71) des Anhängers (1) an jedem beliebigen Zeitpunkt nach der Berechnung eines Mittelwertes der Mittelwert der Intensität der induzierten Kraft als Zielwert (10) genommen wird, der vor dem ausgewählten Augenblick zur Steuerung der gesagten Bremsung in der Messungszeitspanne berechnet wurde.

2. Verfahren nach Anspruch 1, **dadurch gekennzeichnet, dass** zur Steuerung der Betätigung der Bremsorgane (71) des Anhängers (1) an jedem beliebig ausgewählten Augenblick nach der Berechnung eines Mittelwertes:
- die Erzeugung eines genannten Betriebssignals (11) an dem Traktor (2) überwacht wird, das die Betätigung seiner Bremsvorrichtung (8) und also der ausgewählte Augenblick zur Steuerung der Bremsung der Fahrzeuge entdeckt wird und
- wenn die Intensität der durch den Anhänger (1) in der Kupplungsvorrichtung (3) induzierten Kraft von dem tolerierbaren Schwellwert relativ zu dem Zielwert (10) abweicht, die Betätigung der Bremsorgane (71) der Anhänger (1) erst gesteuert wird, wenn das Betriebssignal (11) der Bremsvorrichtung (8) des Traktors (1) entdeckt wird.

3. Verfahren nach Anspruch 1 oder 2, **dadurch gekennzeichnet, dass** die Erzeugung eines sogenannten Betriebssignals (11) an dem Traktor (2) überwacht wird, das ein erzeugtes elektrisches Signal (11) zur Steuerung der Funktion von Lichtsignalen ist, die dafür geeignet sind, die Benutzung der Bremsen des gesagten Traktors (2) zu signalisieren, und somit die Betätigung der Bremsvorrichtung (8) dieses Fahrzeugs entdeckt.

4. Verfahren nach irgendeinem der Ansprüche 1 bis 3, **dadurch gekennzeichnet, dass** einerseits, wenn die Bremssteuerung erkannt wirt, der Vorgang zur Berechnung des Mittelwertes der in der Kupplungsvorrichtung (3) induzierten Kraft unterbrochen wird, und der Verlauf der in der Kupplungsvorrichtung (3) induzierten Kraft überwacht wird, und andererseits, wenn die Bremsung vollzogen wurde, der Vorgang zur Berechnung des Mittelwertes der in der Kupplungsvorrichtung (3) induzierten Kraft wieder aufgenommen wird.

5. Verfahren nach irgendeinem der Ansprüche 1 bis 4, **dadurch gekennzeichnet, dass** die Intensität der in der Kupplungsvorrichtung (3) induzierten Kraft bei einer vorgeschriebenen Messfrequenz gemessen wird, um eine wesentlich kontinuierliche Überwachung der Intensität der in der gesagten Kupplungsvorrichtung (3) induzierten Kraft durchzuführen.

6. Verfahren nach irgendeinem der Ansprüche 1 bis 5, **dadurch gekennzeichnet, dass**
- die Intensität der in der Kupplungsvorrichtung (3) durch den Anhänger (2) induzierten Kraft in beiden möglichen Belastungsrichtungen dieser Kupplungsvorrichtung (3), und zwar in Zug- und Druckbelastung, gemessen wird, und
- dass die gemessene Intensität einer Angabe bezüglich der angesprochenen Kraftrichtung zugeordnet ist, und
- dass sowohl zur Berechnung eines Mittelwertes als zur Überwachung des Verlaufs der Kraft beim Bremsen zusätzlich zu dem Messwert der der induzierten Kraft die Angabe zu der induzierten Kraft genutzt wird, um die Bremsung zu steuern, unabhängig von der Fahrrichtung der durch die Kupplungsvorrichtung (3) verbundenen Fahrzeuge (1, 2) und von der Flächenneigung, auf welcher die Fahrzeuge verfahren.

7. Verfahren nach Anspruch 6, **dadurch gekennzeichnet, dass**:
- als die in der Kupplungsvorrichtung (3) induzierte Kraft in der Druckrichtung der gesagten Kupplungsvorrichtung (3) erkannt wird,
- wenn als Absolutwert der Unterschied (D) zwischen der gemessenen induzierten Kraft und dem gesagten Zielwert (10) über einem ersten vorgeschriebene Schwellwert (A) liegt, die Bremsung dann verstärkt (E1) wird, während
- wenn als Absolutwert der Unterschied (D) zwischen der gemessenen induzierten Kraft und dem gesagten Zielwert (10) unter einem ersten vorgeschriebene Schwellwert (A) liegt, die Bremsung dann unverändert beibehalten wird, dass,
- als die in der Kupplungsvorrichtung (3) induzierte Kraft in der Zugrichtung der gesagten Kupplungsvorrichtung (3) erkannt wird,
- wenn als Absolutwert der Unterschied (D) zwischen der gemessenen induzierten Kraft und dem gesagten Zielwert (10) unter einem zweiten vorgeschriebenen Schwellwert (B) liegt, die Bremsung dann reduziert (F1) wird,
- wenn als Absolutwert der Unterschied (D) zwischen der gemessenen induzierten Kraft und dem gesagten Zielwert (10) über einem zweiten vorgeschriebenen Schwellwert (B) aber unter einem dritten vorgeschriebenen Schwellwert (C) liegt, die Bremsung dann unverändert beibehalten (F2) wird.
- wenn als Absolutwert der Unterschied (D) zwischen der gemessenen induzierten Kraft und dem gesagten Zielwert (10) über einem dritten vorgeschriebenen Schwellwert (C) liegt, die Bremsung dann verstärkt (F3) wird.

8. Verfahren nach irgendeinem der Ansprüche 1 bis 7, **dadurch gekennzeichnet, dass** zur Erkennung des Augenblickes, ab welchem der Traktor (2) und der Anhänger (1) anfangen zu fahren, eine elektrische Einschaltung eines Organs des Antriebsmittels (6) des Traktors (2) überwacht wird.

9. Verfahren nach irgendeinem der Ansprüche 1 bis 8. **dadurch gekennzeichnet, dass** zur Steuerung der Bremsvorrichtung (7) des Anhängers (1) an jedem Rad (4) des Anhängers (1) eine Angabe zu der Drehung dieses Rads (4) erfasst wird, und dass die Angaben zur Drehung der jeweiligen Räder (4) des Fahrzeuges (1) zur Vermeidung deren Blockierung in der Bremsphase berücksichtigt werden.

10. Verfahren nach irgendeinem der Ansprüche 1 bis 9, **dadurch gekennzeichnet, dass** eine Ausschaltung eines Organs des Antriebsmittels (6) des Traktors (2) überwacht wird und bei der Erkennung einer derartigen Ausschaltung, die Bremsvorrichtung (3) des Anhängers (1) gesteuert wird, um den gesagten Anhänger (1) zum Stillstand zu bringen.

11. Bremsvorrichtung eines Anhängers (1), der mit einem Traktor (2) durch eine Kupplungsvorrichtung (3) zu verbinden ist, wobei der Traktor selber mit einer mit einem Betätigungsorgan (83) versehenen Bremsvorrichtung (8) ausgestattet ist, wobei der Bremsvorrichtung (7) des Anhängers (1) zumindest ein Steuergerät (73) umfasst, wobei das Steuergerät (73) ein Steuerverfahren durchführt, in welchem beim Bremsvorgang des Traktors:
- die Intensität der in der Kupplungsvorrichtung (3) wenigstens an einem bestimmten Zeitpunkt induzierten Kraft gemessen wird,
- die Intensität der an dem gegebenen Zeitpunkt gemessenen induzierten Kraft mit einem vorab ermittelten Zielwert (10) verglichen wird und, wenn der Unterschied zwischen der Intensität der gemessenen induzierten Kraft und dem genannten Zielwert (10) von einem tolerierbaren vorgeschriebenen Schwellenwert abweicht, die Betätigung der Bremsvorrichtungen (71) eines Anhängers (1) gesteuert wird, um auf das Bremsen des genannten Anhängers (1) zu wirken, und
- die vorgenannten Schritte, also das Messen, der Vergleich und die Bremssteuerung, wiederholt werden, bis der Unterschied zwischen der Intensität der gemessenen induzierten Kraft und dem genannten Zielwert unter dem tolerierbaren vorgeschriebenen Schwellenwert liegt,
wobei diese Bremsvorrichtung **dadurch gekennzeichnet dass**, das Steuergerät (73) folgende Funktionen übernimmt:
- dass es den Augenblick überwacht und detektiert, ab welchem der Traktor und der Anhänger (1) vermutlich fahren werden und,
- dass es ab diesem Moment die Intensität der in der Kupplungsvorrichtung (3) induzierten Kraft wenigstens zeitweise misst,
- dass es für eine vorgegebene Messzeitspanne der Durchschnittswert der Intensität der induzierten Kraft berechnet und diesen Mittelwert speichert.
- dass es mindestens nach der Speicherung eines Mittelwertes die Schritte zur Messung und zur Berechnung eines neuen Mittelwerts und zur Speicherung dieses neuen Mittelwertes mit Überschreiben des vorhin gespeicherten Mittelwerts wiederholt vornimmt,
- dass es zur Steuerung der Betätigung der Bremsorgane (71) des Anhängers (1) an jedem beliebigen Zeitpunkt nach der Berechnung eines Mittelwertes den Mittelwert der Intensität der induzierten Kraft, als Zielwert (10) nimmt, der vor dem ausgewählten Augenblick zur Steuerung der gesagten Bremsung in der Messungszeitspanne berechnet wurde.

12. Vorrichtung nach Anspruch 11, **dadurch gekennzeichnet, dass** das Steuergerät soweit ausgerüstet ist,
- um die Erzeugung eines Betriebssignals (11) eines Steuerorgans (83) einer Bremsvorrichtung (8) eines Traktors (2) zu überwachen und zu erfassen, wobei dieses Signal den ausgewählten Augenblick zur Steuerung der Bremsung entdeckt.
- um zu ermitteln, bei Erfassung eines derartigen Betriebssignals, ob die Intensität der in der Kupplungsvorrichtung (3) durch den Anhängers (1) induzierten Kraft von einem vorgeschriebenen tolerierbaren Schwellwert im Verhältnis zu einem vorab gespeicherten Zielwert (10) abweicht,
- um die Betätigung der Bremsorgane (71) des Anhängers (1), falls die Intensität der in der Kupplungsvorrichtung (3) durch den Anhängers (1) induzierten Kraft von einen vorgeschriebenen tolerierbaren Schwellwert im Verhältnis zu dem Zielwert (10) abweicht.

13. Vorrichtung nach Anspruch 11 oder 12, **dadurch gekennzeichnet, dass** das Steuergerät (73) soweit ausgerüstet ist, um an dem Traktor (2) die Erzeugung eines sogenannten Betriebssignals (11) zu überwachen, das ein erzeugtes elektrisches Signal (11) zur Steuerung der Funktionierung von Lichtsignalen ist, die dafür geeignet sind, die Funktion der Bremsung des gesagten Traktors (2) zu signalisieren, und somit die Betätigung der Bremsvorrichtung (8) dieses Fahrzeugs entdeckt.

14. Vorrichtung nach irgendeinem der Ansprüche 11 bis 13, **dadurch gekennzeichnet, dass** das Steuergerät (73) soweit ausgerüstet ist, um einerseits, wenn die Bremssteuerung erkannt wirt, den Vorgang zur Berechnung des Mittelwertes der in der Kupplungsvorrichtung (3) induzierten Kraft zu unterbrechen, und den Verlauf der in der Kupplungsvorrichtung (3) induzierten Kraft zu überwachen, und andererseits, wenn die Bremsung vollzogen wurde, den Vorgang zur Berechnung des Mittelwertes der in der genannte Kupplungsvorrichtung (3) induzierten Kraft wieder aufzunehmen.

15. Vorrichtung nach irgendeinem der Ansprüche 11 bis 14, **dadurch gekennzeichnet, dass** das Steuergerät (73) soweit ausgerüstet ist, um die Intensität der in der Kupplungsvorrichtung (3) induzierten Kraft bei einer vorgeschriebenen Messfrequenz zu messen, damit eine wesentlich kontinuierliche Überwachung der Intensität der in der gesagten Kupplungsvorrichtung (3) induzierten Kraft durchgeführt wird.

16. Vorrichtung nach irgendeinem der Ansprüche 11 bis 15, **dadurch gekennzeichnet, dass** das Steuergerät (73) soweit ausgerüstet ist,
- um die Intensität der in der Kupplungsvorrichtung (3) durch den Anhänger (1) induzierten Kraft in beiden möglichen Belastungsrichtungen dieser Kupplungsvorrichtung (3), und zwar in Zug- und Druckbelastung, zu messen, und
- dass die gemessene Intensität einer Angabe bezüglich der angesprochenen Kraftrichtung zugeordnet ist, und
- dass sowohl zur Berechnung eines Mittelwertes als zur Überwachung des Verlaufs der Kraft beim Bremsen zusätzlich zu dem Messwert der induzierten Kraft die Angabe zu der induzierten Kraftrichtung genutzt wird, um die Bremsung zu steuern, unabhängig von der Fahrrichtung der durch die Kupplungsvorrichtung (3) verbundenen Fahrzeuge (1, 2) und von der Flächenneigung, auf welcher die Fahrzeuge verfahren.

17. Vorrichtung nach Anspruch 16, **dadurch gekennzeichnet, dass** das Steuergerät (73) dazu ausgerüstet ist:
- als die in der Kupplungsvorrichtung (3) induzierte Kraft in der Druckrichtung der gesagten Kupplungsvorrichtung (3) erkannt wird,
- wenn als Absolutwert der Unterschied (D) zwischen der gemessenen induzierten Kraft und dem gesagten Zielwert (10) über einem ersten vorgeschriebenen Schwellwert (A) liegt, die Bremsung dann zu verstärken, während
- wenn als Absolutwert der Unterschied (D) zwischen der gemessenen induzierten Kraft und dem gesagten Zielwert (10) unter einem ersten vorgeschriebene Schwellwert (A) liegt, die Bremsung dann unverändert beizubehalten, dass,
- als die in der Kupplungsvorrichtung (3) induzierte Kraft in der Zugrichtung der gesagten Kupplungsvorrichtung (3) erkannt wird,
- wenn als Absolutwert der Unterschied (D) zwischen der gemessenen induzierten Kraft und dem gesagten Zielwert (10) unter einem zweiten vorgeschriebenen Schwellwert (B) liegt, die Bremsung dann zu reduzieren.
- wenn als Absolutwert der Unterschied (D) zwischen der gemessenen induzierten Kraft und dem gesagten Zielwert (10) über einem zweiten vorgeschriebene Schwellwert (B) aber unter einem dritten vorgeschriebenen Schwellwert (C), die Bremsung dann unverändert beizubehalten.
- wenn als Absolutwert der Unterschied (D) zwischen der gemessenen induzierten Kraft und dem gesagten Zielwert (10) über einem dritten vorgeschriebene Schwellwert (C) liegt, die Bremsung dann zu verstärken.

18. Vorrichtung nach irgendeinem der Ansprüche 11 bis 17, **dadurch gekennzeichnet, dass** das Steuergerät (73) soweit ausgerüstet ist, um den Augenblick, ab welchem der Traktor (2) und der Anhänger (1) anfangen zu fahren, zu überwachen und zu erkennen.

19. Vorrichtung nach irgendeinem der Ansprüche 11 bis 18, **dadurch gekennzeichnet, dass** das Steuergerät (73) soweit ausgerüstet ist, eine elektrische Einschaltung eines Organs des Antriebsmittels (6) des Traktors (2) zu überwachen und zu erkennen, das heißt, ein Ereignis zur Erkennung des Augenblickes, ab welchem der Traktor (2) und der Anhänger (1) anfangen zu fahren.

20. Vorrichtung nach irgendeinem der Ansprüche 11 bis 19, **dadurch gekennzeichnet, dass** das Steuergerät (73) soweit ausgerüstet ist:
- um an jedem Rad (4) des Anhängers (1) eine Angabe zu der Drehung dieses Rads (4) zu erfassen, und
- die Angaben zur Drehung der jeweiligen Räder (4) des Fahrzeuges (1) zur Vermeidung deren Blockierung in der Bremsphase zu berücksichtigen.

21. Vorrichtung nach irgendeinem der Ansprüche 11 bis 20, **dadurch gekennzeichnet, dass** das Steuergerät (73) soweit ausgerüstet ist, um eine Ausschaltung eines Organs des Antriebsmittels (6) des Traktors (2) zu überwachen und bei der Erkennung einer derartigen Ausschaltung die Bremsvorrichtung (3) des Anhängers (1) derart zu steuern, dass der gesagte Anhänger (1) zum Stillstand gebracht wird.

22. Vorrichtung nach irgendeinem der Ansprüche 11 bis 21, **dadurch gekennzeichnet, dass** ein Kraftsensor (30) in einem dem Anhänger (1) zugeordneten Teil der Kupplungsvorrichtung (3) angeordnet ist.

## Claims

1. Method for controlling a braking device (7) equipping a first rolling vehicle (1), referred to as the trailer vehicle (1), connected through a coupling device (3) to a second vehicle (2), referred to as the towing vehicle (2), the towing vehicle (2) being itself equipped with a braking device (8) provided with an actuation element (83),
according to which method, when braking the towing vehicle:
- the intensity of the force induced in the coupling device (3) is measured, at least at a given instant, then
- the measured intensity of the induced force at the given instant under consideration is compared with a target value (10) determined beforehand and, when the difference between the measured intensity of the induced force and said target value (10) deviates from a predetermined tolerated threshold, the actuation of the braking elements (71) of the trailer vehicle (1) is initiated to influence the braking of said trailer vehicle (1), and
- the aforementioned steps are repeated of measuring, comparing, and initiating the braking until the difference between the measured intensity of the induced force and the target value (10) is less than the predetermined tolerated threshold,
the method being **characterised in that**:
- through monitoring, the instant starting from which the towing vehicle (2) and the trailer vehicle (1) are about to roll is detected, then, starting from that instant
• at least in an intermittent way, the intensity of the force induced in the coupling device (3) is measured and,
• for a period of measurement of predetermined duration, the average value is calculated of the intensity of the induced force and this average value is stored,
• after completion of the storage of an average value, the steps are repeated of measuring, calculating a new average value then of storing this new average value, replacing the average value previously stored,
- with a view to initiating the actuation of the braking elements (71) of the trailer vehicle (1) at any chosen instant after the calculation of an average value, taken as the target value (10) is the average value of the intensity of the induced force which has been calculated in the period of measurement preceding the instant chosen to initiate said braking.

2. Method according to claim 1, **characterised in that** to initiate the actuation of the braking elements (71) of the trailer vehicle (1) at any chosen instant after the calculation of an average value:
- the production is monitored on the towing vehicle (2) of a signal (11), referred to as the operational signal, which indicates the actuation of its braking device (8) and thus the instant chosen to initiate the braking of the vehicles, and
- when the force induced in the coupling device (3) by the trailer vehicle (1) deviates with respect to the tolerated threshold predetermined with respect to the target value (10), the actuation of the braking elements (71) of the trailer vehicle (1) is initiated, with a view to correcting the intensity of said induced force, only if the signal (11) of operation of the braking device (8) of the towing vehicle (1) has been detected beforehand.

3. Method according to claim 1 or 2, **characterised in that** the production is monitored on the towing vehicle (2) of a signal (11) which, referred to as the operational signal, is an electrical signal (11) produced to activate the operation of luminous signals intended to indicate the use of the brakes of said towing vehicle (2), and thus indicate the actuation of the braking device (8) of this vehicle.

4. Method according to any one of the claims 1 to 3, **characterised in that**, on the one hand, when the actuation of the braking is detected, the process of calculation of an average value for the force induced in the coupling device (3) is interrupted, and the development of the force induced in the coupling device (3) is monitored and, on the other hand, when the braking has been achieved, the process of calculation of the average value for the force induced in the coupling device (3) is resumed.

5. Method according to any one of the claims 1 to 4, **characterised in that** the intensity of the force induced in the coupling device (3) is measured with a predetermined frequency of measurement so as to achieve a substantially continuous monitoring of the intensity of the force induced in said coupling device (3).

6. Method according to any one of the claims 1 to 5, **characterised in that**:
- the intensity of the force induced in the coupling device (3) by the trailer vehicle (1) is measured in the two possible directions of stress of this coupling device (3), i.e. in traction and in compression, and
- a piece of information relating to the direction of the force considered is linked to the measured intensity, and
- used in addition to the measured value of the induced force both in calculating an average value and in monitoring the development of the force during an act of braking is the information relating to the direction of the induced force so as to actuate the braking regardless of the direction of displacement of the vehicles (1, 2) connected through the coupling device (3) and regardless of the inclination of the surface on which said vehicles are moving.

7. Method according to claim 6, **characterised in that**:
- when the force induced in the coupling device (3) is detected in the direction of compression of said coupling device (3),
• if, in absolute value, the difference (D) between the measured intensity of the induced force and said target value (10) is greater than a first predetermined threshold value (A), then the braking is increased (E1), whereas
• if, in absolute value, the difference (D) between the measured intensity of the induced force and said target value (10) is less than said first predetermined threshold value (A), then the braking is maintained (E2) in the same state,
- when the force induced in the coupling device (3) is detected in the direction of traction of said coupling device (3),
• if, in absolute value, the difference (D) between the measured intensity of the induced force and said target value (10) is less than a second predetermined threshold value (B), then the braking is decreased (F1),
• if, in absolute value, the difference (D) between the measured intensity of the induced force and said target value (10) is greater than said second predetermined threshold value (B), but less than a third predetermined threshold value (C), then the braking is maintained (F2) in the same state,
• if, in absolute value, the difference (D) between the measured intensity of the induced force and said target value (10) is greater than said third predetermined threshold value (C), then the braking is increased (F3).

8. Method according to any one of the claims 1 to 7, **characterised in that** to detect the instant starting at which the towing vehicle (2) and the trailer vehicle (1) are about to roll, the switching on of voltage to a motor means element (6) of the towing vehicle (2) is monitored.

9. Method according to any one of the claims 1 to 8, **characterised in that**, for control of the braking device (7) of the trailer vehicle (1), an indication is obtained at the level of each wheel (4) of the trailer vehicle (1) relating to the rotation of that wheel (4), and the indications about the rotation of each of said wheels (4) of the vehicle (1) are taken into account so as to prevent their blockage in braking phase.

10. Method according to any one of the claims 1 to 9, **characterised in that** a switching off of voltage to a motor means element (6) of the towing vehicle (2) is monitored, and when such a switching off of voltage is detected, the braking device (3) <sic. (7)> of the trailer vehicle (1) is actuated so as to stop said trailer vehicle (1).

11. Braking device for a trailer vehicle (1) intended to be connected to a towing vehicle (2) through a coupling device (3), the towing vehicle being itself equipped with a braking device (8) equipped with an actuation element (83), said braking device (7) of the trailer vehicle (1) comprising at least one controlling apparatus (73), the controlling apparatus (73) making use of a method of control according to which, when braking the towing vehicle:
- the intensity of the force induced in the coupling device (3) is measured, at least at a given instant, then
- the measured intensity of the induced force at the given instant under consideration is compared with a target value (10) determined beforehand and, when the difference between the measured intensity of the induced force and said target value (10) deviates from a predetermined tolerated threshold, the actuation of the braking elements (71) of the trailer vehicle (1) is initiated to influence the braking of said trailer vehicle (1), and
- the aforementioned steps are repeated of measuring, comparing, and initiating the braking until the difference between the measured intensity of the induced force and the target value (10) is less than the predetermined tolerated threshold, this braking device being **characterised in that** the controlling apparatus (73) ensures the following operations:
- monitoring and detecting the instant starting at which the towing vehicle and the trailer vehicle (1) are about to roll, and starting at that instant,
• at least intermittently, measuring the intensity of the force induced in the coupling device (3), and
• for a measurement period of predetermined duration, calculating the average value of the intensity of the induced force and storing that average value,
• upon completion of storage of an average value, repeating the steps of measuring, of calculating a new average value, then of storing this new average value replacing the average value previously stored,
- with a view to initiating the actuation of the braking elements of the trailer vehicle at any chosen instant after calculation of an average value, taking as a target value the average value of the intensity of the induced force which has been calculated in the measurement period preceding the instant chosen for actuating said braking.

12. Device according to claim 11, **characterised in that** the controlling apparatus is designed:
- to monitor and detect the production of a signal (11) of operation of an actuation element (83) for a braking device (8) of a towing vehicle (2), this signal making known the instant chosen for actuation of the braking,
- when such an operational signal has been detected, to determine whether the intensity of the force induced in the coupling device (3) by the trailer vehicle (1) deviates from a tolerated threshold predetermined with respect to a previously stored target value (10),
- to initiate the actuation of the braking elements (71) of the trailer vehicle (1) in the case where the intensity of the force induced in the coupling device (3) by the trailer vehicle (1) deviates from a tolerated threshold predetermined with respect to the target value (10).

13. Device according to claim 11 or 12, **characterised in that** the controlling apparatus (73) is designed to monitor the production on the towing vehicle (2) of a signal (11) which, referred to as the operational signal, is an electrical signal (11) produced to activate the operation of luminous signals intended to indicate the use of the brakes of said towing vehicle (2), and thus make known the actuation of the braking device (8) of this vehicle.

14. Device according to any one of the claims 11 to 13, **characterised in that** the controlling apparatus (73) is designed, on the one hand, to interrupt, when the actuation of the braking is detected, the process of calculation of an average value for the force induced in the coupling device (3) and to monitor the development of the force induced in said coupling device (3), and, on the other hand, when the braking has been achieved, to resume the process of calculation of the average value for the force induced in said coupling device (3).

15. Device according to any one of the claim 11 to 14, **characterised in that** the controlling apparatus (73) is designed to measure the intensity of the force induced in the coupling device (3) with a predetermined frequency of measurement so as to achieve a substantially continuous monitoring of the intensity of the force induced in said coupling device (3).

16. Device according to any one of the claims 11 to 15, **characterised in that** the controlling apparatus (73) is designed:
- to measure the intensity of the force induced in the coupling device (3) by the trailer vehicle (1) in the two possible directions of stress of this coupling device (3), i.e. in traction and in compression, and
- to link to the measured intensity a piece of information relating to the direction of the force considered, and
- in addition to the measured value of the induced force, to make use of the information relating to the direction of the induced force, both in calculating an average value and in monitoring the development of the force during an act of braking, so as to actuate the braking regardless of the direction of displacement of the vehicles (1, 2) connected through the coupling device (3) and regardless of the inclination of the surface on which said vehicles are moving.

17. Device according to claim 16, **characterised in that** the controlling apparatus (73) is designed:
- when the force induced in the coupling device (3) is detected in the direction of compression of said coupling device (3),
• to increase the braking if, in absolute value, the difference (D) between the measured intensity of the induced force and said target value (10) is greater than a first predetermined threshold value (A),
• to maintain the braking in the same state if, in absolute value, the difference (D) between the measured intensity of the induced force and said target value (10) is less than said first predetermined threshold value (A),
- when the force induced in the coupling device (3) is detected in the direction of traction of said coupling device (3),
• to reduce the braking if, in absolute value, the difference (D) between the measured intensity of the induced force and said target value (10) is less than a second predetermined threshold value (B),
• to maintain the braking in the same state if, in absolute value, the difference (D) between the measured intensity of the induced force and said target value (10) is greater than said second predetermined threshold value (B), but less than a third predetermined threshold value (C),
• to increase the braking if, in absolute value, the difference (D) between the measured intensity of the induced force and said target value (10) is greater than said third predetermined threshold value (C).

18. Device according to any one of the claims 11 to 17, **characterised in that** the controlling apparatus (73) is designed to monitor and detect the instant starting at which the towing vehicle (2) and the trailer vehicle (1) are about to roll.

19. Device according to any one of the claims 11 to 18, **characterised in that** the controlling apparatus (73) is designed to monitor and detect a switching on of voltage to a motor means element (6) of the towing vehicle (2), i.e. an occurrence indicating the instant starting at which the towing vehicle (2) and the trailer vehicle (1) are about to roll.

20. Device according to any one of the claims 11 to 19, **characterised in that** the controlling apparatus (73) is designed:
- to obtain at the level of each wheel (4) of the trailer vehicle (1) an indication relating to the rotation of that wheel (4), and
- to take into account the indications about the rotation of each of said wheels (4) of the vehicle (1) so as to prevent their blocking in braking phase.

21. Device according to any one of the claims 11 to 20, **characterised in that** the controlling apparatus (73) is designed to monitor a switching off of voltage to a motor means element (6) of the towing vehicle (2) and when such a switching off is detected to actuate the braking device (3) <sic. (7)> of the trailer vehicle (1) so as to stop said trailer vehicle (1).

22. Device according to any one of the claims 11 to 21, **characterised in that** a force sensor (30) is disposed in a part of the coupling device (3) connected to the trailer vehicle (1).
